# EUROPEAN PATENT APPLICATION

(11) **EP 4 737 534 A1**
(43) Date of publication of application: **06.05.2026**
(21) Application number: 25210001.1
(22) Date of filing: 21.10.2025
(51) Int. Cl.: C09K 11/02, B32B 7/023, C09D 5/22, F21K 2/00, G09F 13/20, G09F 19/22

(54) **LIGHTWEIGHT PHOSPHORESCENT STRIP**

(30) Priority: 29.10.2024 US 202463713458 P
(71) Applicant: Pexco Aerospace, Inc., Union Gap, WA 98903-1510 (US)
(72) Inventor: REBAR, Victoria, Union Gap, WA (US); HOWARD, Chris, Union Gap, WA (US); SUBLETT, Don, Union Gap, WA (US)
(74) Representative: Maiwald GmbH

(57) **Abstract**

A phosphorescent composition is provided. The composition includes clear polymer and phosphorescent pigment dispersed in the clear polymer. About 5% to about 40% of the phosphorescent pigment is loaded in the clear polymer.

## Description

### Related Applications

This application claims the benefit of U.S. Provisional Patent Application No. 63/713,458 filed on October 29, 2024.

### Field of Invention

The present invention relates generally to phosphorescent strips used as emergency lighting that have a reduced weight.

### Background

Emergency lighting in buildings, transportation, and even on roadways are vital in the event of an emergency where power is lost. Examples of emergency lighting include battery-operated lights, generator-operated lights, phosphorescent paints, and phosphorescent decals. In the aircraft industry, for example, passengers escaping a dark plane may be guided down the aisle and to the nearest emergency exit through phosphorescent illuminated strips on or near the floor.

### Summary of Invention

According to one aspect, a phosphorescent composition is provided. The composition includes a clear polymer and phosphorescent pigment dispersed in the clear polymer. About 5% to about 40% of the phosphorescent pigment is loaded in the clear polymer. The clear polymer may include polycarbonate, and the phosphorescent pigment may include strontium aluminate.

According to another aspect, a phosphorescent strip is provided. The strip includes a phosphorescent layer arranged over a reflective layer. The phosphorescent layer is made from a phosphorescent composition that includes a clear polymer loaded with about 5% to about 40% of phosphorescent pigment.

According to yet another aspect, a phosphorescent assembly for a flooring cavity is provided. The phosphorescent assembly includes a phosphorescent layer arranged over a reflective layer. The phosphorescent layer is made from a phosphorescent composition that includes a clear polymer and a phosphorescent pigment. The assembly further includes support portions extending from a bottom surface of the reflective layer and spaced apart along a length of the reflective layer. The assembly is configured to cover a cavity having sidewalls defined by flooring. At least outer portions of the phosphorescent layer may overlie upper surfaces of the flooring. The support portions are configured to extend into the cavity and contact a bottom surface of the cavity to support central portions of the phosphorescent layer.

The foregoing and other features of the application are described below with reference to the drawings.

### Brief Description of the Drawings

FIGURE 1 illustrates some embodiments of a cross-sectional view of a phosphorescent assembly as described herein.
FIGURE 2 illustrates some embodiments of a phosphorescent assembly comprising support structures.
FIGURE 3 illustrates some embodiments of a cross-sectional view of the phosphorescent assembly of FIGURE 2.
FIGURE 4 illustrates some other embodiments of a phosphorescent assembly comprising support structures.
FIGURE 5 illustrates some embodiments of a cross-sectional view of the phosphorescent assembly arranged within a flooring cavity.
FIGURES 6, 7, 8, 9, and 10 illustrate some other embodiments of a cross-sectional view of the phosphorescent assembly arranged within a flooring cavity.

### Detailed Description

In the airplane industry, a plane's aisle may be illuminated with lighting that runs along the length of the aisle flooring and/or that runs perpendicular to the length of the aisle flooring to guide passengers to exits. The lighting may comprise a rubber material loaded with phosphorescent pigments configured to glow in dark conditions. To protect the phosphorescent pigment and rubber material from wear, such as wear from passenger shoes and suitcases, the rubber material is encased by several other support layers. The support layers add weight to the airplane and also may complicate reproduction and replacement of the lighting. Thus, various embodiments of the present application provide a phosphorescent strip system that provides sufficient luminescence with less materials to reduce the system's weight while also simplifying manufacturing and installation of the system.

The principles of the present application relate to a phosphorescent strip, such as for use in airplanes for emergency lighting, and thus will be described below in this context. It will be appreciated that the principles of the application may be applicable to other industries that utilize emergency lighting applications, such as in stairs, aisles, or hallways in office buildings, residential apartments, theaters, other types transportation (e.g., trains, busses, ships), etc.

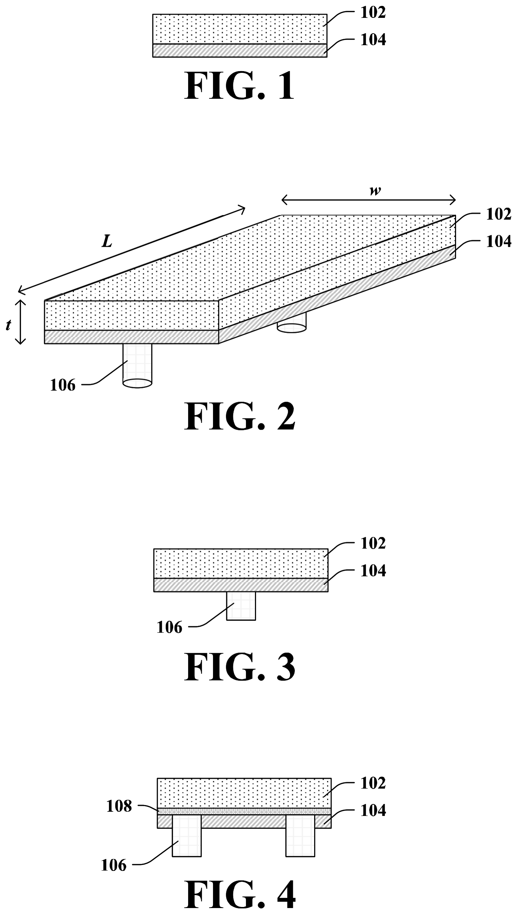

Turning now to Fig. 1, a phosphorescent strip is shown generally. The strip may comprise a phosphorescent layer 102 arranged over a reflective layer 104. The phosphorescent layer 102 comprises a phosphorescent composition, which includes a phosphorescent pigment dispersed within a clear polymer. In some embodiments, the clear polymer comprises polycarbonate, an acrylic, or the like. The clear polymer may also contain a blend of several polymers, such as a blend of polycarbonate and acrylic. The phosphorescent pigment may comprise strontium aluminate, zinc sulfide, or some other suitable pigment that has phosphorescent properties. For example, in some embodiments, the clear polymer comprises polycarbonate because it has favorable mechanical properties, such as scratch resistance, while also being lightweight. To comply with federal regulations, the phosphorescent pigment may comprise strontium aluminate dispersed within the polycarbonate. In some other embodiments the phosphorescent composition may contain more than one phosphorescent pigment. For example, the phosphorescent composition can contain both strontium aluminate and zinc sulfide.

Preferably about 5% to about 40% of the phosphorescent pigment, more preferably about 5% to about 30%, even more preferably about 10% to about 20%, or yet even more preferably about 10% to about 15% of the phosphorescent pigment is loaded into the clear polymer to form the phosphorescent layer 102. If too much phosphorescent pigment is loaded into the clear polymer, the mechanical strength may decrease without a substantial benefit in increased luminescence effects. For example, in some embodiments, where the clear polymer comprises polycarbonate, about 30% or less of the polycarbonate is loaded with the phosphorescent pigment, or even more preferably about 20% or less of the polycarbonate is loaded with the phosphorescent pigment. An increase in phosphorescent pigment may also unnecessarily add weight to the overall phosphorescent strip without added luminescence effects.

It will be appreciated that the term "loaded" relates to weight percent, meaning that in a mixture of clear polymer and phosphorescent pigment, about 5% to about 40% of the total weight of the mixture is the phosphorescent pigment. As an example, when about 20% or less of the weight of the phosphorescent layer 102 comprises the phosphorescent pigment, the phosphorescent layer 102 can provide sufficient glow for emergency lighting purposes while also being at least 50% lighter than conventional phosphorescent emergency lighting strips. In some embodiments, the phosphorescent layer 102 may have an area weight of between 100 mg/cm² and 200 mg/cm².

The phosphorescent layer 102 may be arranged over a reflective layer 104. The reflective layer 104 may comprise a lightweight, reflective material such as foil or a reflective coating. The phosphorescent pigment within the phosphorescent layer 102 charges in the presence of light. Light incident from a top surface of the phosphorescent layer 102 charges as it travels towards a bottom surface of the phosphorescent layer 102. When the reflective layer 104 is present on the bottom surface of the phosphorescent layer 102, the incident light may reflect off of the reflective layer 104 and travel from the bottom surface towards the top surface of the phosphorescent layer 102. Thus, the reflective layer 104 increases the light exposure to the phosphorescent layer 102, which efficiently charges the phosphorescent pigments within the phosphorescent layer 102, thereby reducing the charge time of the phosphorescent layer 102 necessary to provide luminescence visible to the human eye in the dark. Additionally, the luminescence or glow effect of the phosphorescent layer 102 is enhanced by the reflective layer 104, as luminescence may reflect off of the reflective layer 104. With more efficient charging and enhanced luminescence due to the reflective layer 104, less phosphorescent pigment is needed to provide an effective glow from the phosphorescent layer 102. The more efficient charging and enhanced luminescence effect also increases the duration of luminescence.

In some embodiments, the reflective layer 104 may be formed on the phosphorescent layer 102 via a vacuum deposition process (e.g., sputtering, chemical vapor deposition, plasma deposition, etc.) or may be applied to the phosphorescent layer 102 as a reflective coating by brushing, spraying, rolling, or the like. These processes allow the reflective layer 104 to be very thin, thereby adding only minimal weight to the phosphorescent strip. In some other embodiments, the reflective layer 104 is a premade layer and attached to the backside of the phosphorescent layer 102 by way of an adhesive, a double-sided tape, or the like. In some such embodiments, the adhesive or tape is substantially transparent to allowed light incident on the phosphorescent layer 102 to reach the reflective layer 104. In yet some other embodiments, as the phosphorescent layer 102 is extruded, a roll of reflective layer 104 (e.g., aluminum foil roll) is unrolled and attached to the phosphorescent layer 102 at the extruder output. It will be appreciated that other methods of forming and attaching the phosphorescent layer 102 with the reflective layer 104 are within the scope of this disclosure.

Turning additionally to Figs. 2 and 3, a perspective view and a cross-sectional view, respectively, of the phosphorescent strip are shown. In some embodiments, the phosphorescent strip further can include support structures 106 protruding from a bottom surface of the phosphorescent layer 102. The support structures 106 may be spaced apart from one another along a length L of the strip. The support structures 106 are configured to withstand force applied to a top surface of the phosphorescent layer 102 such as the weight of footsteps and suitcases. The support structures 106 may comprise a lightweight material such as a plastic, a metal, or a composite thereof. The support structures 106 may be tube-like or hollow to save material and reduce weight. The support structures 106 may extend from the reflective layer 104 such that the reflective layer 104 separates the support structure 106 from the phosphorescent layer 102.

Turning additionally to Fig. 4, in some embodiments, several support structures 106 are spaced apart from one another along a width w of the strip. The phosphorescent strip may further include an adhesive 108 arranged between the phosphorescent layer 102 and the reflective layer 104. In some other embodiments, the reflective layer 104 may be applied to the phosphorescent layer 102 via a coating, sputtering, or some other process such that any kind of adhesive material is omitted or indistinguishable from the reflective layer 104. In some embodiments, the support structures 106 may extend from the phosphorescent layer 102 and through the reflective layer 104. When an adhesive layer 108 is present, the adhesive layer 108 may be arranged between to bond the support structure 106 and the phosphorescent layer 102. In some embodiments, the support structures 106 may be monolithic with the phosphorescent layer 102 or the reflective layer 104. In other embodiments, the support structures 106 may comprise a different material than the phosphorescent layer 102 and/or the support structures 106.

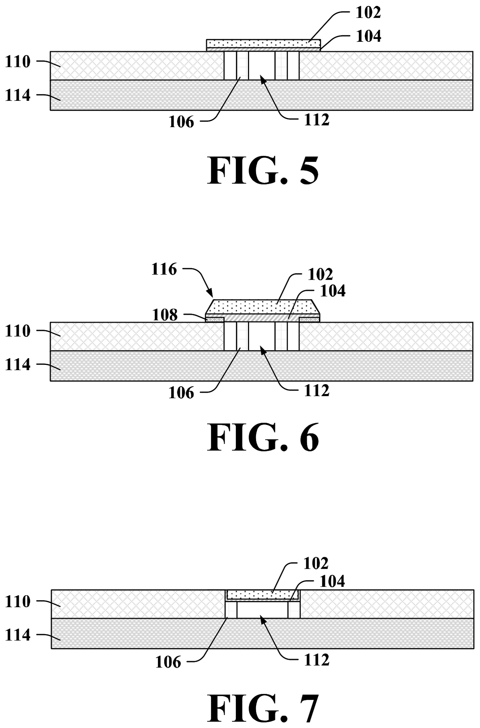

Turning additionally to Fig. 5, the phosphorescent strip of Fig. 4 may be configured to fit within a cavity 112 in flooring 110. For example, to save weight and/or costs, the flooring 110, such as carpet, in an airplane may be removed at the areas where the phosphorescent strip is to be placed, thereby forming the cavity 112 within the flooring 110. The cavity 112 may extend completely through the thickness of the flooring 110 to expose a subfloor 114 that supports the flooring 110. Thus, the cavity may be defined by inner sidewalls of the flooring 110 and an upper surface of the subfloor 114.

The phosphorescent layer 102 may be thinner than the flooring 110. For example, the phosphorescent layer 102 may have a thickness in a range of between, preferably, about 25 mils and 100 mils or more preferably between about 35 mils and about 50 mils. The reflective layer 104 may be thinner than the phosphorescent layer 102. For example, the reflective layer 104 may have a thickness in a range of between, preferably, about 5 microns and 20 microns or more preferably between about 10 mils and about 15 mils.

The support structures 106 may extend into the cavity 112 and support the phosphorescent strip arranged over the cavity 112. Because the support structures 106 are dispersed throughout the phosphorescent strip, open space filled with air is also present in the cavity 112, which reduces the weight of the flooring 110 with phosphorescent strip. Outer portions of the phosphorescent layer 102 and the reflective layer 104 may extend over an upper surface of the flooring 110. In some embodiments, the subfloor 114 may be a reflective material, such as a metal. In some such embodiments, the reflective layer 104 may be omitted because the subfloor 114 may provide the desired reflective effects beneath the phosphorescent layer 102. Because the phosphorescent layer 102 comprises polycarbonate, which is durable and lightweight even when produced at a very small thickness, a protective layer is not placed over the phosphorescent layer 102.

Turning now to Fig. 6, in some other embodiments, an adhesive 108 may be arranged between the upper surface of the flooring 110 and the phosphorescent layer 102 and/or reflective layer 104 to attach the phosphorescent layer 102 and/or reflective layer 104 to the flooring 110. At least the phosphorescent layer 102 may comprise outer portions 116 that directly overlie the flooring 110, the outer portions 116 being tapered. Thus, the outer portions 116 may be supported by the flooring 110, while a central portion of the strip is supported by the support structures 106.

Turning now to Fig. 7, in yet some other embodiments, the phosphorescent strip may be arranged entirely within the cavity 112 such that an uppermost surface of the flooring 110 is substantially coplanar with an uppermost surface of the phosphorescent layer 102. In such embodiments, the height and thus weight of the support structures 106 are reduced compared to the embodiments shown in Figs. 5 and 6. The support structures 106 may contact the inner sidewalls of the flooring 110 such that the phosphorescent strip is somewhat wedged within the cavity 112 to secure the strip within the cavity 112. In some embodiments, the reflective layer 104 may also extend onto sidewalls of the phosphorescent layer 102 to provide additional points of reflection for incident light.

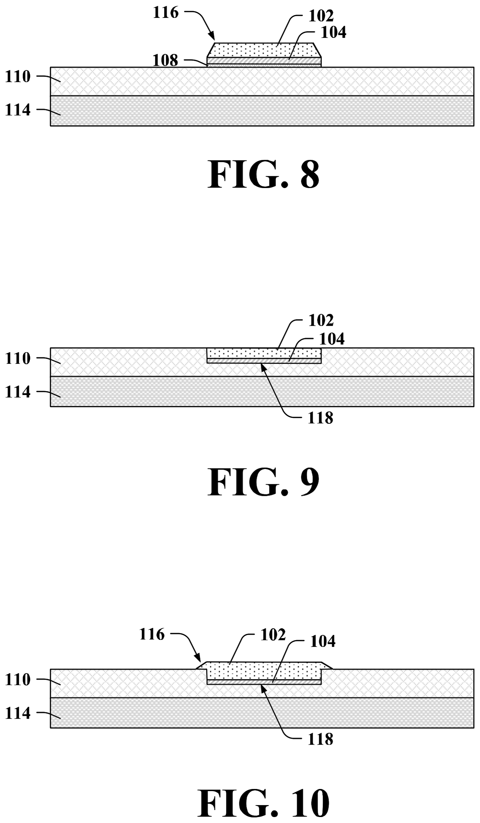

Turning now to Fig. 8, in some other embodiments, the flooring 110 may not contain any cavities and thus, the phosphorescent strip may be secured directly to a top surface of the flooring 110 using adhesive 108. Alternatively, screws, staples, or some other fastening means may extend through the phosphorescent strip, the reflective layer 104, and the flooring 110 to secure the phosphorescent strip to the flooring 110. In some such embodiments, the phosphorescent strip may comprise premade holes configured to receive such fastening means.

Turning now to Fig. 9, in some other embodiments, the flooring 110 may comprise an indentation 118 that does not extend completely through a thickness of the flooring 110. The phosphorescent strip may be arranged within the indentation 118.

Turning additionally to Fig. 10, the phosphorescent strip shown in Fig. 9 may further comprise outer portions 116 that protrude out of the indentation 118 of the flooring and overlie a topmost surface of the flooring 110. In Fig. 9, these outer portions 116 are part of the phosphorescent layer 102. In some other embodiments, reflective layer 104 may also comprise outer portions (not shown) arranged between the outer portions 116 of the phosphorescent layer 102 and the topmost surface of the flooring 110, such as what is shown in Fig. 6. Further, like what is shown in Fig. 6, an adhesive 108 may be present between the outer portions 116 and the topmost surface of the flooring 110 in the embodiment of Fig. 10.

The following are non-limiting examples of some embodiments of the present disclosure:
Embodiment 1. A phosphorescent composition comprising:
   a clear polymer; and
   a phosphorescent pigment dispersed within the clear polymer, wherein about 5% to about 40% of the phosphorescent pigment is loaded in the clear polymer.
Embodiment 2. The phosphorescent composition of Embodiment 1, wherein the phosphorescent pigment comprises strontium aluminate.
Embodiment 3. The phosphorescent composition of Embodiment 1 or 2, wherein about 10% to about 20% of the phosphorescent pigment is loaded in the clear polymer.
Embodiment 4. The phosphorescent composition of Embodiment 1 or 2, wherein about 5% to about 30% of the phosphorescent pigment is loaded in the clear polymer.
Embodiment 5. The phosphorescent composition of any one of Embodiments 1 to 4, wherein the clear polymer comprises a polycarbonate, an acrylic, or a combination thereof.
Embodiment 6. A phosphorescent assembly comprising:
   a reflective layer; and
   a phosphorescent layer arranged over the reflective layer, the phosphorescent layer comprising a phosphorescent pigment dispersed within polycarbonate.
Embodiment 7. The phosphorescent assembly of Embodiment 6, wherein the phosphorescent layer has a thickness between about 35 mils and 50 mils.
Embodiment 8. The phosphorescent assembly of Embodiment 6 or 7, further comprising an adhesive arranged between the reflective layer and the phosphorescent layer, the adhesive being clear.
Embodiment 9. The phosphorescent assembly of any one of Embodiments 6 to 8, wherein the phosphorescent pigment comprises strontium aluminate.
Embodiment 10. The phosphorescent assembly of any one of Embodiments 6 to 9, wherein about 5% to about 30% of the phosphorescent pigment is loaded in the polycarbonate.
Embodiment 11. The phosphorescent assembly of any one of Embodiments 6 to 10, wherein the phosphorescent layer has an area weight of between 100 mg/cm² and 200 mg/cm².
Embodiment 12. The phosphorescent assembly of any one of Embodiments 6 to 11, wherein the reflective layer comprises aluminum foil.
Embodiment 13. The phosphorescent assembly of any one of Embodiments 6 to 12, further comprising support structures arranged on a backside of the reflective layer, the support structures protruding from the backside of the reflective layer and being spaced apart from one another throughout a length of the phosphorescent layer.
Embodiment 14. The phosphorescent assembly of Embodiment 13, wherein the support structures are arranged along a central portion of the reflective layer, wherein the backside of the reflective layer comprises an adhesive.
Embodiment 15. The phosphorescent assembly of Embodiment 13 or 14, wherein the support structures are configured to rest within a bottom surface of a cavity, sidewalls of the cavity being defined by flooring.
Embodiment 16. The phosphorescent assembly of Embodiment 15, wherein outer sidewalls of the phosphorescent layer are configured to contact the sidewalls of the cavity.
Embodiment 17. The phosphorescent assembly of Embodiment 15 or 16, wherein outer portions of the phosphorescent layer are configured to overlie upper surfaces of the flooring that define the cavity and that are adjacent to the cavity.
Embodiment 18. The phosphorescent assembly of Embodiment 17, wherein the outer portions of the phosphorescent layer comprise an adhesive configured to couple the outer portions of the phosphorescent layer with the upper surfaces of the flooring.
Embodiment 19. A method comprising:
   forming a phosphorescent composition by dispersing a phosphorescent pigment within polycarbonate;
   forming the phosphorescent composition into an elongated strip;
   attaching a reflective layer to a bottom surface of the elongated strip to form a phosphorescent assembly; and
   arranging the phosphorescent assembly into a cavity of flooring.
Embodiment 20. The method of Embodiment 19, wherein about 5% to about 30% of the phosphorescent pigment is loaded in the polycarbonate.

Although certain embodiments have been shown and described, it is understood that equivalents and modifications falling within the scope of the appended claims will occur to others who are skilled in the art upon the reading and understanding of this specification.

## Claims

1. A phosphorescent composition comprising:
a clear polymer; and
a phosphorescent pigment dispersed within the clear polymer, wherein about 5% to about 40% of the phosphorescent pigment is loaded in the clear polymer.

2. The phosphorescent composition of claim 1, wherein the phosphorescent pigment comprises strontium aluminate.

3. The phosphorescent composition of claims 1 or 2, wherein the clear polymer comprises polycarbonate, an acrylic, or a combination thereof.

4. The phosphorescent composition of any one of claims 1 to 3, wherein about 5% to about 30% of the phosphorescent pigment is loaded in the clear polymer.

5. The phosphorescent composition of any one of claims 1 to 3, wherein about 10% to about 20% of the phosphorescent pigment is loaded in the clear polymer.

6. A phosphorescent assembly comprising:
a reflective layer (104); and
a phosphorescent layer (102) arranged over the reflective layer (104), the phosphorescent layer (102) comprising the phosphorescent composition of any one of claims 1 to 5.

7. The phosphorescent assembly of claim 6, wherein the phosphorescent layer (102) has a thickness (t) between about 35 mils and 50 mils.

8. The phosphorescent assembly of claim 6 or 7, further comprising an adhesive (108) arranged between the reflective layer (104) and the phosphorescent layer (102), the adhesive (108) being clear.

9. The phosphorescent assembly of any one of claims 6 to 8, wherein the phosphorescent layer (102) has an area weight of between 100 mg/cm² and 200 mg/cm².

10. The phosphorescent assembly of any one of claims 6 to 9, further comprising support structures (106) arranged on a backside of the reflective layer (104), the support structures (106) protruding from the backside of the reflective layer (104) and being spaced apart from one another throughout a length of the phosphorescent layer (102).

11. The phosphorescent assembly of claim 10, wherein the support structures (106) are arranged along a central portion of the reflective layer (104), wherein the backside of the reflective layer (104) comprises an adhesive (108) in contact with the support structures (106).

12. The phosphorescent assembly of claim 10 or 11, wherein the support structures (106) are configured to rest within a bottom surface of a cavity (112), sidewalls of the cavity being defined by flooring (110).

13. The phosphorescent assembly of claim 12, wherein outer sidewalls of the phosphorescent layer (102) are configured to contact the sidewalls of the cavity (112).

14. The phosphorescent assembly of claim 12, wherein outer portions (116) of the phosphorescent layer (102) are configured to overlie upper surfaces of the flooring (110) that define the cavity (112) and that are adjacent to the cavity (112).

15. A method comprising:
forming the phosphorescent composition of any one of claims 1 to 5 by dispersing a phosphorescent pigment within the clear polymer;
forming the phosphorescent composition into an elongated strip;
attaching a reflective layer (104) to a bottom surface of the elongated strip to form a phosphorescent assembly; and
arranging the phosphorescent assembly into a cavity (112) of flooring (110).
